# FASCICULE DE BREVET EUROPEEN

(11) **EP 3 552 054 B1**
(45) Date de publication et mention de la délivrance du brevet: **13.01.2021**
(21) Numéro de dépôt: 17817772.1
(22) Date de dépôt: 20.11.2017
(51) Int. Cl.: G02C 3/04, G02C 3/00, A44C 5/00, G02C 5/20

(54) **DISPOSITIF DE LUNETTES POUVANT ÊTRE TRANSFORMÉ RÉVERSIBLEMENT EN BRACELET**
BRILLENVORRICHTUNG, DIE REVERSIBEL IN EIN ARMBAND UMWANDELBAR IST
SPECTACLES DEVICE THAT CAN BE REVERSIBLY TRANSFORMED INTO A BRACELET

(30) Priorité: 09.12.2016 FR 1670742
(43) Date de publication de la demande: 16.10.2019
(73) Titulaire: RENARD & MILLOT, 35000 Rennes (FR)
(72) Inventeur: MILLOT, Christophe, 35700 Rennes (FR)
(74) Mandataire: Touroude, Magali Linda
(86) Numéro de dépôt international: PCT/FR2017/000214
(87) Numéro de publication internationale: WO 2018/104593

(56) Documents cités:
- US-A- 3 774 998
- US-A1- 2013 321 759
- US-A1- 2015 338 677
- US-A1- 2016 139 431
- US-A1- 2016 223 832
- US-B1- 6 843 562

## Description

### 1. Domaine de l'invention

La présente invention concerne un dispositif de type lunettes qui peut être transformé réversiblement en bracelet.

### 2. Art antérieur

De nombreuses personnes atteintes de presbytie utilisent des lunettes de type loupe pour des besoins liés à la lecture. Lunettes proposées le plus souvent en pharmacie et chez les opticiens. Ces personnes ne sont pas contraintes de les porter en permanence mais pour une activité de lecture que l'on peu considérer comme temporaire. Le lecteur presbyte dispose d'une paire de lunettes appropriée qu'il laisse à disposition sur les lieux de leur utilisation les plus fréquentes: bureau, table de nuit, vide poche, etc. Pour autant, ce besoin temporaire de lunettes peut subvenir à tout instant d'une journée, en toute occasion et en tout lieu pour bon nombre de ces personnes et ce, de façon imprévue. C'est en particulier le cas fréquent pour les personnes actives qui ne possèdent pas toujours de sac à main ou de pochette lors de leurs activités. Il est également peu pratique ou peu recommandé de transporter des lunettes de vues au fond d'une poche, de les porter remontées sur le front ou attachées par une branche sur un vêtement pour une utilisation ultérieure tout en assurant une activité sans gêne ou risque de briser les lunettes.

Ce problème de disponibilité immédiate et imprévue de lunettes est en partie comblé par des dispositifs de vue se portant autour du cou à l'aide d'une chaînette ou placés dans une poche pour les versions pliables compactes ou encore plus récemment attachées à un porte-clés. Il est aussi possible de laisser plusieurs paires de lunettes aux endroits quotidiennement fréquentés par l'utilisateur (voiture, bureau, table de nuit, fond de poche, etc). Il arrive fréquemment, qu'un lecteur dépourvu de lunettes, doive emprunter à un autre lecteur ses lunettes pour un besoin imprévu de lecture.

Pouvoir disposer à tout instant d'un accessoire de vue n'est toutefois pas suffisamment pratique au regard du matériel existant et de l'utilisation qui en est fait. La diversité des situations de lecture largement augmentés par la quantité d'écrans et d'interfaces qui nous entourent, le handicap possiblement dangereux, généré par un manque de lunettes face à un besoin impérieux de lecture, une mobilité accrue des individus couplé à une grande diversité d'activité nécessite de penser un produit plus simple d'usage, mieux intégré au quotidien de l'utilisateur actif, nomade et peu prévoyant.

### 3. Objectifs de l'invention

Un objectif de l'invention est de proposer un dispositif de lunettes qui puisse être protégé plus facilement et plus efficacement quand il n'est pas utilisé.

Un autre objectif de l'invention est de proposer un dispositif de lunettes qui soit aisément accessible et disponible en permanence pour un besoin immédiat, même imprévisible.

### 4. Exposé de l'invention

L'invention concerne un dispositif de lunettes pouvant être transformé réversiblement en bracelet, comprenant un chevalet de nez, deux verres de lunettes et deux systèmes de branches. Chaque système de branches comprend une branche interne et une branche externe. Pour chaque système de branches, la branche interne est formée d'un matériau à mémoire de forme, ayant une forme initiale cintrée, et la branche externe est formée d'au moins un matériau à déformation élastique. La branche externe comprend une première cavité, s'étendant longitudinalement, adaptée pour permettre le coulissement de la branche interne à l'intérieur de la branche externe. La branche externe comprend aussi une seconde cavité adaptée pour accueillir, au moins en partie, le chevalet de nez et les verres de lunettes. En outre, chacun des verres de lunettes est fixé respectivement à une extrémité de chacune des branches internes par un premier élément de liaison. Le chevalet de nez est fixé sur chaque branche interne par au moins un second élément de liaison.

On entend par «matériau à mémoire de forme» ou « matériau à mémoire élastique », un matériau ou un alliage de matériaux ayant la propriété d'être déformé à volonté et de retrouver sa forme initiale quand il n'est plus manipulé. Le matériau à mémoire de forme selon l'invention a une forme initiale cintrée, c'est à dire que quand il n'est soumis à aucune contrainte extérieure il tend à revenir vers cette forme initiale cintrée.

On entend par matériau « à déformation élastique», un matériau capable de se déformer de manière réversible. Le au moins un matériau à déformation élastique selon l'invention est apte à se déformer élastiquement d'une position horizontale à une position cintrée autour d'un membre humain.

Au sens de l'invention, on entend qu'une caractéristique technique a « sensiblement » une propriété idéale, si cette caractéristique technique semble à l'œil nu posséder cette propriété idéale. Cependant de légères variations, envisageables par l'Homme du Métier, autour de la propriété idéale sont également possibles.

Grâce au système de branches comprenant une branche interne coulissant dans la première cavité de la branche externe et grâce à la seconde cavité de la branche externe, le dispositif selon l'invention peut donc être utilisé en un « mode lunettes », quand l'utilisateur en a le besoin, ou bien en un « mode bracelet » quand l'utilisateur ne souhaite pas utiliser de lunettes mais souhaite tout de même garder des lunettes à portée de main. En « mode lunettes », le système de branches est déplié: la branche interne de chaque système de branches se trouve en grande partie à l'extérieur de la première cavité de la branche externe et, les verres de lunettes ainsi que le chevalet de nez sont entièrement visibles. La branche interne de chaque système de branches tend à retrouver sa forme initiale cintrée et exerce sur le visage de l'utilisateur une légère pression permettant un bon maintien du dispositif. En « mode bracelet », le système de branches est escamoté: la branche interne de chaque système de branches se trouve en grande partie, voire en totalité, à l'intérieur de la première cavité de la branche externe et, les verres de lunettes ainsi que le chevalet de nez se trouvent en grande partie, voire en totalité, à l'intérieur de la seconde cavité des branches externes. Les verres de lunettes sont donc dissimulés et protégés en grande partie, voire en totalité, par les branches externes. En « mode bracelet », les branches internes retrouvent sensiblement leur forme initiale cintrée.

Selon l'invention, la branche externe de chaque système de branches comprend en outre une lame préformée bistable. La lame préformée bistable a une première position d'équilibre dans laquelle elle est sensiblement plane et une deuxième position d'équilibre dans laquelle elle est cintrée longitudinalement. Elle s'étend longitudinalement le long de la première cavité. La lame préformée bistable présente comme avantage de ne nécessiter qu'un faible moment de torsion pour passer d'une forme d'équilibre à l'autre et assure dans ses deux positions d'équilibre une bonne rigidité à la branche externe de chaque système de branches. Avantageusement, la lame préformée bistable présente un rétrécissement de largeur à son extrémité la plus éloignée du chevalet de nez. Ceci permet, en « mode lunettes », de conserver le cintrage de cette extrémité la plus éloignée du chevalet de nez alors que le reste de la lame préformée est en position horizontale et donc, d'assurer une légère pression sur le visage de l'utilisateur pour un maintien optimal des lunettes sur le visage. En effet, le moment de torsion pour passer d'une forme d'équilibre à l'autre au niveau du rétrécissement de largeur a une valeur légèrement supérieure à celui nécessaire au niveau du reste de la lame préformée bistable.

De manière préférentielle, le premier élément de liaison est un support pour verre fixé à la branche interne et audit verre de lunettes. Le support pour verre permet un bon maintien des verres de lunettes sur les branches internes. Il permet également de conserver un parallélisme entre les verres de lunettes et le visage de l'utilisateur quand ce dernier porte le dispositif en « mode lunettes ».

De manière préférentielle, la branche interne de chaque système de branches est de forme torique et la branche externe de chaque système de branches comprend un taquet formant saillie sur la première cavité. Le taquet est adapté pour former butée avec l'extrémité de la branche interne la plus éloignée du chevalet de nez. Ceci a notamment pour avantage d'empêcher l'extraction totale de la branche interne de la première cavité de la branche externe.

De manière préférentielle, le au moins un second élément de liaison est constitué d'un ergot disposé à une extrémité du chevalet de nez et d'une rainure disposée longitudinalement le long de la branche interne. L'ergot a une forme adaptée pour pouvoir coulisser dans la rainure. Cet élément de liaison permet d'une part de modifier l'écart entre les verres de lunettes afin de l'adapter à différentes morphologies de têtes et d'autre part de pouvoir rendre l'encombrement longitudinal de l'ensemble composé par le chevalet de nez et les verres de lunettes moindre, permettant un dimensionnement longitudinal de taille réduite de la seconde cavité.

Avantageusement, au moins une came est disposée d'un côté du chevalet de nez. La au moins une came est adaptée pour permettre un recouvrement, au moins partiel, des branches internes et des verres de lunettes entre eux. En effet, la branche interne du côté du chevalet de nez où est disposée la au moins une came ne coulisse pas dans le même plan que la branche interne du côté sans came du chevalet de nez. Ceci a pour avantage de pouvoir rendre l'encombrement longitudinal de l'ensemble composé par le chevalet de nez et les verres de lunettes encore moindre, permettant un dimensionnement longitudinal de taille encore plus réduite de la seconde cavité.

De manière préférentielle, le chevalet de nez a sensiblement une forme de «X». Ceci permet notamment dans un mode de réalisation particulier de fixer chaque branche interne par deux deuxièmes éléments de liaison au chevalet de nez.

De manière préférentielle, le dispositif selon l'invention comprend un dispositif de fixation amovible entre le chevalet de nez et chacune des branches externes. Le caractère « amovible » du dispositif de fixation réside dans la mise en œuvre d'éléments de liaison, disposés respectivement sur le chevalet de nez et sur chacune des branches externes, aptes à se déformer élastiquement, de manière à pouvoir passer d'une position d'assemblage à une position de désassemblage, et vice-versa. Le dispositif de fixation amovible permet, selon que les éléments de liaison le constituant sont assemblés ou au contraire désassemblés, d'empêcher, ou au contraire d'autoriser, le mouvement de coulissement entre les branches internes et les branches externes et le mouvement de coulissement entre le chevalet de nez et les branches internes quand le dispositif selon l'invention se trouve en « mode bracelet ».

De manière préférentielle, les éléments constitutifs du dispositif selon l'invention possède tous au moins un axe de symétrie. Ceci permet notamment, en « mode lunettes », de pouvoir positionner, de manière indifférenciée, le dispositif dans un sens ou dans l'autre sur le visage.

### 5. Liste des figures

L'invention, ainsi que les différents avantages qu'elle présente, seront plus facilement compris grâce à la description qui va suivre d'un mode non limitatif de réalisation de celle-ci, donnée en référence aux dessins, dans lesquels :
- La Figure 1 représente une vue éclatée du dispositif selon l'invention;
- La Figure 2 représente les deux modes d'utilisation du dispositif de la figure 1;
- Les Figure 3A et 3B représentent le dispositif selon la Figure 1 en un « mode transitoire » placé à l'horizontale et totalement déplié. La Figure 3A est une vue de dessus (les branches externes n'y sont pas représentées) alors que la figure 3B est une vue de face;
- Les Figure 4A et 4B représentent le dispositif selon la Figure 1 en un « mode transitoire » à l'horizontale et escamoté. La Figure 4A est une vue de dessus (les branches externes n'y sont pas représentées) alors que la figure 4B est une vue de face;
- Les Figures 5A et 5B représentent le dispositif de fixation amovible entre le chevalet de nez et une branche externe du dispositif de la Figure 1. La Figure 5A est selon un «mode transitoire» alors que la figure 5B est en « mode bracelet ».
- La Figure 6 représente le chevalet de nez du dispositif de la figure 1 en vue de face;
- Les Figures 7A et 7B représentent une vue en perspective du dispositif selon la Figure 1 qui comprend en outre un dispositif d'éclairage. La figure 7A est une représentation en «mode lunettes », le dispositif d'éclairage étant une LED. La figure 7B est une représentation en « mode bracelet », le dispositif d'éclairage étant un dispositif pour lire l'heure.

### 6. Description détaillée d'un mode de réalisation

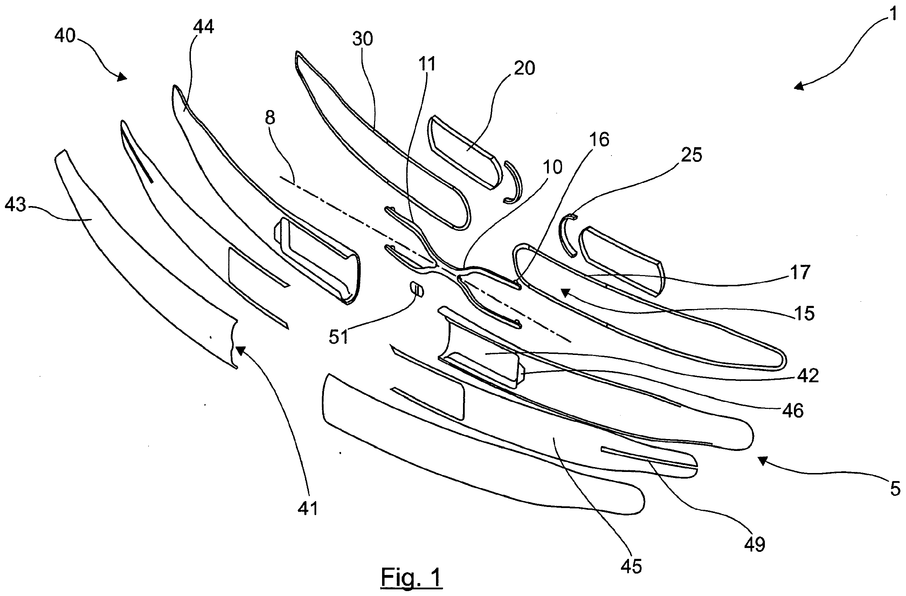

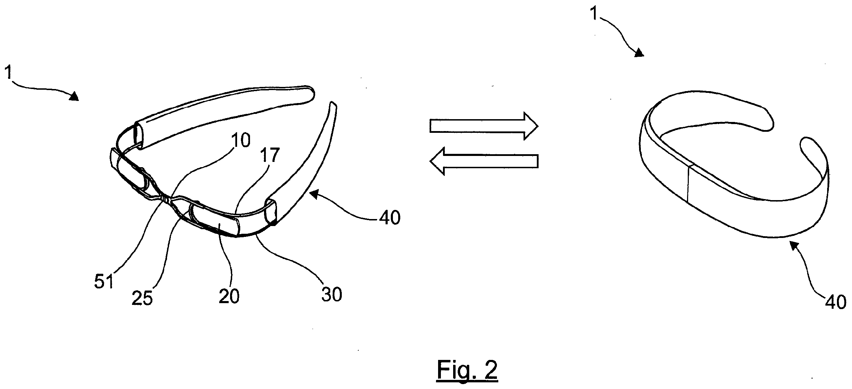

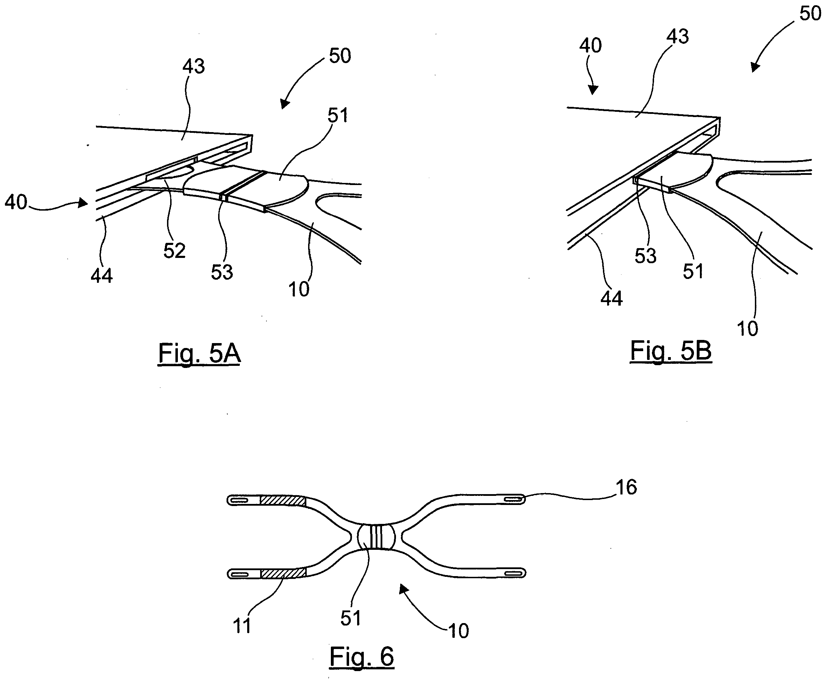

En référence aux figures 1, 2, 3A, 3B, 4, 5A, 5B et 6 le dispositif 1 comprend un chevalet de nez 10, deux verres de lunettes 20 et deux systèmes de branches 5. Il peut être utilisé en «mode lunettes » ou bien être transformé en « mode bracelet » en passant par plusieurs « modes transitoires ».

Chaque système de branches 5 comprend une branche interne 30 et une branche externe 40.
Pour chaque système de branches 5, la branche externe 40 comprend une branche supérieure 43 et une branche inférieure 44, les branches supérieure 43 et inférieure 44 étant en silicone ou en tout autre matière souple. La branche supérieure 43 et/ou la branche inférieure 44 sont évidées et assemblées l'une à l'autre par thermosoudage ou toute autre méthode d'assemblage. L'ensemble formé par la branche supérieure 43 et la branche inférieure 44 comprend une première cavité 41, permettant le coulissement de la branche interne 30 à l'intérieur de la branche externe 40 et une seconde cavité 42 conçue pour permettre à tout ou partie de l'ensemble formé par le chevalet de nez 10 et les verres de lunettes 20 d'être rangés à l'intérieur de cet espace. L'ensemble formé par la branche supérieure 43 et la branche inférieure 44 comprend également un taquet 46 formant saillie sur la première cavité 41. Le taquet 46 peut être constitutif du matériau utilisé pour fabriquer les branches supérieure 43 et inférieure 44 ou bien être constitué d'une pièce différente, ajoutée aux branches supérieure 43 et inférieure 44. Le taquet 46 a pour vocation de stopper l'extraction de la monture de lunettes à une distance donnée.
Pour chaque système de branches 5, la branche externe 40 comprend en outre une lame préformée bistable 45, métallique ou en tout autre matériau adéquat. La lame préformée bistable 45 a une première position d'équilibre dans laquelle elle est sensiblement plane et une deuxième position d'équilibre dans laquelle elle est cintrée longitudinalement. La lame préformée bistable 45 est découpée de façon à s'intégrer entre les branches supérieure 43 et inférieure 44, s'étendant le long de la première cavité 41, en butée contre le taquet 46 et de part et d'autre de la seconde cavité 42. Une découpe de pincement 49 est présente à l'extrémité de la lame préformée bistable 45. Cette découpe de pincement 49 a pour effet de conserver un cintrage de cette partie de la lame préformée bistable 45, permettant ainsi aux extrémités des branches inférieures 44 d'exercer une pression sur le visage de l'utilisateur pour un maintien optimal du dispositif 1 sur le visage. Les branches supérieure 43 et inférieure 44 sont solidaires de la lame préformée bistable 45 : elles se déforment élastiquement, accompagnant la déformation de la lame préformée bistable 45 dans l'une ou l'autre de ses positions d'équilibre. C'est l'effet dit « SLAP ». « L'effet SLAP » permet la mise en position droite ou cintrée de la branche externe 40 par une action manuelle en ce sens et le maintien de la branche externe 40 dans la position choisie.
De ces branches externes 40 peut être extrait ou rangé, un ensemble d'éléments composant le reste de la monture de lunettes. Cette extraction ou ce rangement s'effectuent par une traction ou pression symétrique latérale au niveau des branches externes 40. L'extraction de la monture de lunettes est limitée par le taquet 46.

Pour chaque système de branches 5, la branche interne 30 est formée de matériau « à mémoire de forme, pouvant être un métal ou un alliage métallique ou encore un matériau issu de la plasturgie. La branche interne 30 a une forme torique. La branche interne 30 peut être extraite de la branche externe 40 jusqu'à une certaine limite, l'extrémité de la branche interne 30 la plus éloignée du chevalet de nez 10 venant alors en butée contre le taquet 46. L'extrémité de la branche interne 30 la plus proche du chevalet de nez 10 est évidée pour former des rainures 17.

Sur les branches internes 30 sont fixés des supports pour verres 25. Les supports pour verres 25 maintiennent les verres de lunettes 20 et épousent la forme de l'extrémité des branches internes 30 du coté du chevalet de nez 10. Les supports pour verres 25 forment un arc de cercle et suivent la forme des extrémités des branches internes 30 placées du côté du chevalet de nez 10, permettant une mise en position symétrique des verres de lunettes 20, parallèlement au visage quand le dispositif 1 est déplié en « mode lunettes ».

Le chevalet de nez 10 est la pièce, qui repose sur le nez de l'utilisateur et qui fait le lien avec les branches internes 30. Des ergots 16 sont disposés aux extrémités du chevalet de nez 10 et peuvent coulisser dans les rainures 17 aménagées sur les branches internes 30. Le second élément de liaison 15, formé par un ergot 16 pouvant coulisser dans une rainure 17, permet le maintien et le coulissement du chevalet de nez 10 sur les branches internes 30.
Le chevalet de nez 10 est conçu de telle sorte que les branches internes 30 peuvent coulisser l'une en direction de l'autre pour être repliées en direction du centre du chevalet de nez 10. Grâce à des cames 11 disposées d'un seul côté du chevalet de nez 10, les branches internes 30, les supports pour verres 25 et les verres de lunettes 20 gauche et droite peuvent se superposer au centre du chevalet de nez 10 sans que les verres de lunettes 20 ne se touchent, au moment du repliage du dispositif 1. Une fois dans cette position, l'utilisateur en poursuivant le pliage peut faire glisser en totalité les branches internes 30 à l'intérieur des branches externes 40 dans la première cavité 41 jusqu'à ce que les branches externes 40 recouvrent les verres de lunettes 20, les supports pour verre 25 et le chevalet de nez 10. Une fois le dispositif 1 complètement escamoté, l'utilisateur peut bloquer ou au contraire autoriser les mouvements de coulissement entre les branches internes 30 et les branches externes 40 grâce à un dispositif de fixation amovible 50. Le dispositif de fixation amovible 50 est constitué d'un clip 51 disposé au centre du chevalet de nez 10 et de bordures 52 disposées aux extrémités des branches supérieures 43. Le clip 51 peut être une partie intégrante du chevalet de nez 10 ou bien au contraire une pièce supplémentaire fixée sur le chevalet de nez 10. La bordure 52 de chaque branche externe 40 peut être assemblée au clip 51 par encastrement de la bordure 52 dans une rigole 53 aménagée sur le clip 51. Les bordures 52 ainsi encastrées dans les rigoles 53 du clip 51 permettent d'empêcher tout mouvement de coulissement des branches internes 30 dans les branches externes 40 ainsi que tout mouvement de coulissement entre le chevalet de nez 10 et les branches internes 30 du dispositif 1 en « mode bracelet ».

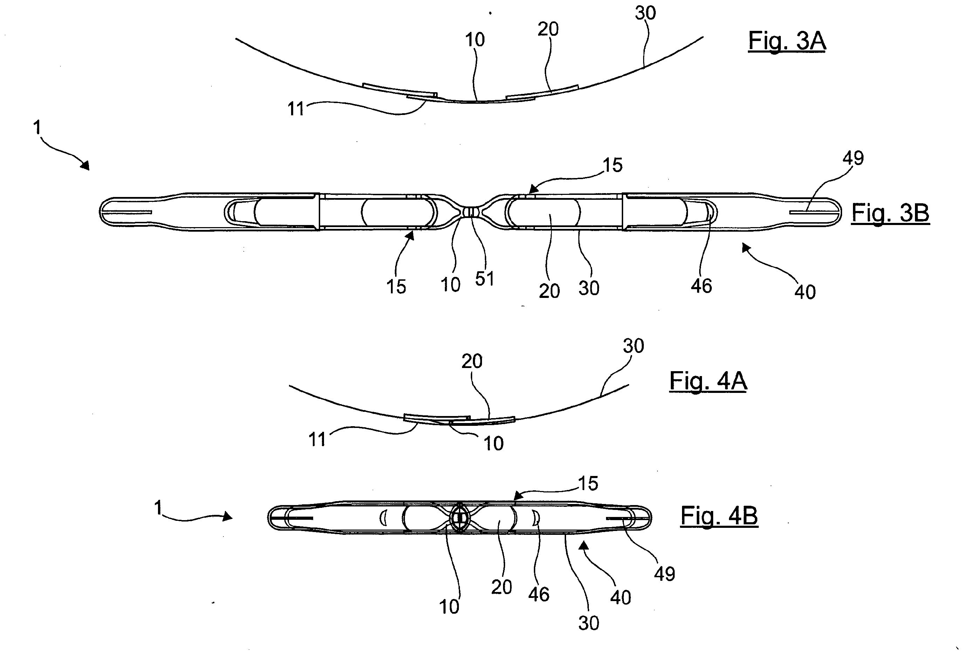

Pour passer d'un « mode bracelet » à un « mode lunettes », l'utilisateur doit dans une première étape désassembler les bordures 52 du clip 51. Puis dans une seconde étape, il doit redresser le dispositif 1 depuis le « mode bracelet » jusqu'à un « mode transitoire » à l'horizontale et escamoté, tel que montré sur la figure 4B. Puis dans une troisième étape, il doit exercer une traction latérale horizontale vers l'extérieure des branches externes 40 jusqu'à un deuxième « mode transitoire » à l'horizontale et totalement déplié, tel que montré sur la figure 4A, faisant apparaître la monture de lunettes. Cette traction a pour effet d'extraire les branches internes 30 des branches externes 40, puis de faire coulisser les extrémités des branches internes 30 le long du chevalet de nez 10, jusqu'à un écartement entre les verres de lunettes 20 choisi par l'utilisateur en fonction de la morphologie de son visage. Un système de graduations peut être disposé sur le chevalet de nez 10 à cet effet. Le redressement du dispositif 1 à l'horizontale, a également pour effet de redresser les lames préformées bistables 45 et les branches supérieure 43 et inférieure 44, qui deviennent droites et se maintiennent dans cette position. Dans une dernière étape, l'utilisateur peut placer le chevalet de nez du dispositif 1 sur le nez et utiliser le dispositif 1 en « mode lunettes », les branches internes 30 étant faites de matériaux à mémoire de forme tendant « naturellement » à reprendre leur forme par défaut, c'est à dire une forme cintrée. Ainsi, les branches intérieures 30 et les branches extérieures 40 au niveau de la découpe en pincement 49 exercent toutes les deux une légère pression sur le visage de l'utilisateur, permettant un maintien optimal du dispositif 1 « en mode lunettes » sur le visage de l'utilisateur.

En référence à la figure 1, le chevalet de nez 10, les verres de lunettes 20, les branches supérieures 43, les branches inférieures 44, les lames préformées bistables 45, les supports de verres 25, et le clip 51 possèdent tous au moins un axe de symétrie horizontal 8. Ainsi le dispositif 1 « en mode lunettes » peut, de manière indifférenciée, être positionné dans un sens ou dans l'autre sur le visage.

Le dispositif 1 selon l'invention est adapté pour toutes les personnes ayant un besoin ponctuel de lunettes de vue lors de leurs activités, qui ne leur permettent pas habituellement de les avoir « sous la main ». Selon les activités envisagées, les verres de lunettes 20 peuvent être des verres de vue, des verres solaires, des verres filtrants, etc.

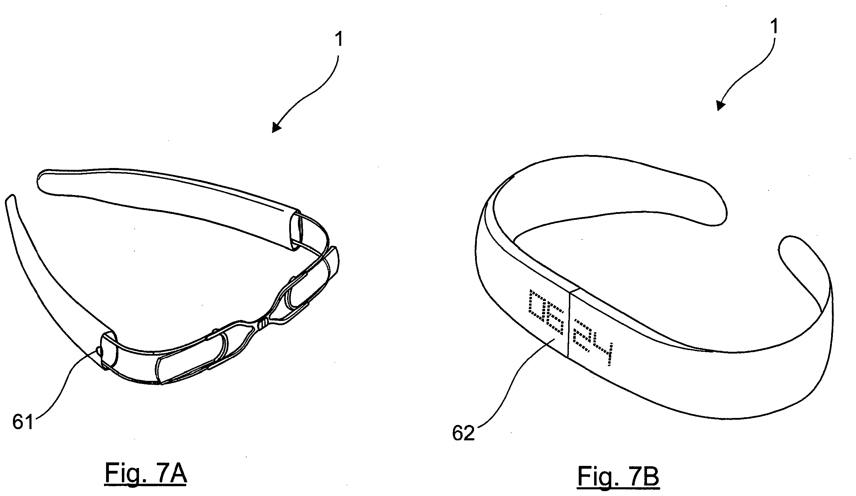

Naturellement, il existe de nombreuses possibilités alternatives et/ou complémentaires de mettre en œuvre le dispositif 1 selon l'invention et le mode de réalisation décrit ci-dessus n'est aucunement limitatif. Par exemple, en référence aux figures 7A et 7B, un dispositif d'éclairage peut être ajouté au dispositif 1 selon l'invention. Ce dispositif d'éclairage peut être une LED (61) ou bien un dispositif permettant de lire l'heure (62).

## Revendications

1. Dispositif (1) de lunettes pouvant être transformé réversiblement en bracelet, comprenant un chevalet de nez (10), deux verres de lunettes (20) et deux systèmes de branches (5), chaque système de branches (5) comprenant une branche interne (30) et une branche externe (40), ladite branche interne (30) étant formée d'un matériau à mémoire de forme ayant une forme initiale cintrée, ladite branche externe (40) étant formée d'au moins un matériau à déformation élastique, ladite branche externe (40) comprenant une première cavité (41), s'étendant longitudinalement, adaptée pour permettre le coulissement de ladite branche interne (30) à l'intérieur de ladite branche externe (40) et une seconde cavité (42), disposée à l'une de ses extrémités, adaptée pour accueillir, au moins en partie, ledit chevalet de nez (10) et lesdits verres de lunettes (20),
chacun desdits verres de lunettes (20) étant fixé respectivement à une extrémité de chacune des branches internes (30) par un premier élément de liaison (25), ledit chevalet de nez (10) étant fixé sur chaque branche interne (30) par au moins un second élément de liaison (15), **caractérisé en ce que** ladite branche externe (40) de chaque système de branches (5) comprend une lame préformée bistable (45), ayant une première position d'équilibre dans laquelle
ladite lame préformée bistable (45) est sensiblement plane et ayant une deuxième position d'équilibre dans laquelle ladite lame préformée bistable (45) est cintrée longitudinalement, ladite lame préformée bistable (45) s'étendant longitudinalement le long de ladite première cavité (41).

2. Dispositif (1) de lunettes selon la revendication 1, **caractérisé en ce que** ladite lame préformée bistable (45) de chaque système de branches (5) présente un rétrécissement de largeur à son extrémité la plus éloignée du chevalet de nez (10).

3. Dispositif (1) de lunettes selon l'une quelconque des revendications précédentes **caractérisé en ce que** ledit premier élément de liaison (25) est un support pour verre fixé à ladite branche interne (30) et audit verre de lunettes (20).

4. Dispositif (1) de lunettes selon l'une quelconque des revendications précédentes, **caractérisé en ce que** ladite branche interne (30) de chaque système de branches (5) est de forme torique et ladite branche externe (40) de chaque système de branches (5) comprend un taquet (46) formant saillie sur ladite première cavité (41), ledit taquet (46) étant adapté pour former butée avec l'extrémité de ladite branche interne (30) la plus éloignée dudit chevalet de nez (10).

5. Dispositif (1) de lunettes selon l'une quelconque des revendications précédentes, **caractérisé en ce que** ledit au moins un second élément de liaison (15) est constitué d'un ergot (16) disposé à une extrémité dudit chevalet de nez (10) et d'une rainure (17) disposée longitudinalement le long de ladite branche interne (30), ledit ergot (16) ayant une forme adaptée adapté pour pouvoir coulisser dans ladite rainure (17).

6. Dispositif (1) de lunettes selon la revendication 5, **caractérisé en ce qu'**au moins une came (11) est disposée d'un côté du chevalet de nez (10), ladite au moins une came (11) étant adaptée pour permettre un recouvrement, au moins partiel, desdites branches internes (30) et desdits verres de lunettes (20) entre eux.

7. Dispositif (1) de lunettes selon la revendication 6, **caractérisé en ce que** ledit chevalet de nez (10) a sensiblement une forme de « X ».

8. Dispositif (1) de lunettes selon l'une quelconque des revendications précédentes, **caractérisé en ce qu'**il comprend un dispositif de fixation amovible (50) entre ledit chevalet de nez (10) et chacune desdites branches externes (40).

9. Dispositif (1) de lunettes selon l'une quelconque des revendications précédentes, **caractérisé en ce que** les différents éléments constitutifs dudit dispositif (1) possèdent tous au moins un axe de symétrie (8).

## Patentansprüche

1. Brillenvorrichtung (1), die reversibel in ein Armband umgewandelt werden kann, die aus einem Nasensteg (10), zwei Brillengläsern (20) und zwei Bügelsystemen (5) besteht, jedes Bügelsystemen (5) einen inneren Bügel (30) und einen äußeren Bügel (40) umfasst, wobei der innere Bügel (30) aus einem Formgedächtnismaterial ausgebildet ist, das eine anfänglich gekrümmte Form aufweist, wobei der äußere Bügel (40) aus wenigstens einem Material gefertigt ist, das zu einer elastischen Verformung fähig ist, wobei der äußere Bügel (40) einen ersten Hohlraum (41), der sich in Längsrichtung erstreckt, der angepasst ist, um das Gleiten des inneren Bügels (30) in den äußeren Bügel (40) zu ermöglichen, und einen zweiten Hohlraum (42) an einem der Enden umfasst, der angepasst ist, um wenigstens teilweise den Nasensteg (10) und die Brillengläser (20) aufzunehmen, wobei jedes der Brillengläser (20) jeweils an einem Ende jedes der inneren Bügel (30) durch ein erstes Verbindungselement (25) fixiert ist, wobei der Nasensteg (10) an jedem inneren Bügel (30) durch wenigstens ein zweites Verbindungselement (15) fixiert ist, **dadurch gekennzeichnet, dass**: wobei der äußere Bügel (40) jedes Bügelsystems (5) aus einer vorgeformten bistabilen Schaufel (45) besteht, die eine erste Gleichgewichtsposition aufweist, in der die vorgeformte bistabile Schaufel (45) weitgehend flach ist, und eine zweite Gleichgewichtsposition aufweist, in der die vorgeformte bistabile Schaufel (45) in Längsrichtung gekrümmt ist, wobei sich die vorgeformte bistabile Schaufel (45) in Längsrichtung entlang des ersten Hohlraums (41) erstreckt.

2. Brillenvorrichtung (1) nach Anspruch 1, **dadurch gekennzeichnet, dass** sich die vorgeformte bistabile Schaufel (45) jedes Bügelsystems (5) an dem Ende in der Breite verengt, das am weitesten von dem Nasensteg (10) entfernt ist.

3. Brillenvorrichtung (1) nach einem der vorhergehenden Ansprüche, **dadurch gekennzeichnet, dass** das erste Verbindungselement (25) ein Glashalter ist, der an dem inneren Bügel (30) und an den Brillengläsern (20) angebracht ist.

4. Brillenvorrichtung (1) nach einem der vorhergehenden Ansprüche, **dadurch gekennzeichnet, dass** der innere Bügel (30) jedes Bügelsystems (5) eine Torusform hat und der äußere Bügel (40) jedes Bügelsystems (5) einen Keil (46) umfasst, der aus dem ersten Hohlraum (41) herausragt, wobei der Keil (46) angepasst ist, um eine Anlage mit dem Ende des inneren Bügels (30) auszubilden, das am weitesten von dem Nasensteg (10) entfernt ist.

5. Brillenvorrichtung (1) nach einem der vorhergehenden Ansprüche, **dadurch gekennzeichnet, dass** das wenigstens eine zweite Verbindungselement (15) aus einem Vorsprung (16), der an dem Ende des Nasenstegs (10) angeordnet ist, und einer Nut (17) besteht, die in Längsrichtung der Länge des inneren Bügels (30) gesetzt ist, wobei der Vorsprung (16) eine Form aufweist, die angepasst ist, um entlang der Nut gleiten zu können.

6. Brillenvorrichtung (1) nach Anspruch 5, **dadurch gekennzeichnet, dass** wenigstens ein Nocken (11) auf einer Seite des Nasenstegs (10) angeordnet ist, wobei der wenigstens eine Nocken (11) angepasst ist, um das wenigstens teilweise Bedecken der inneren Bügel (30) und der Brillengläser (20) zwischen ihnen zuzulassen.

7. Brillenvorrichtung (1) nach Anspruch 6, **dadurch gekennzeichnet, dass** der Nasensteg (10) deutlich die Form eines "X" hat.

8. Brillenvorrichtung (1) nach einem der vorhergehenden Ansprüche, **dadurch gekennzeichnet, dass** sie eine abnehmbare Befestigungsvorrichtung (50) zwischen dem Nasensteg (10) und jedem der äußeren Bügel (40) umfasst.

9. Brillenvorrichtung (1) nach einem der vorhergehenden Ansprüche, **dadurch gekennzeichnet, dass** die verschiedenen konstitutionellen Elemente der Vorrichtung (1) alle wenigstens eine Symmetrieachse besitzen.

## Claims

1. A spectacles device (1) that can be reversibly transformed into a bracelet, composed of a nose bridge (10), two spectacles lenses (20) and two temple systems (5), each temple system (5) comprising an inner temple (30) and an outer temple (40), said inner temple (30) being formed of a shape memory material having an initial curved shape, said outer temple (40) being made of at least one material capable of elastic deformation, said outer temple (40) comprising a first cavity (41), extending longitudinally, adapted to permit the sliding of the said inner temple (30) into the said outer temple (40), and a second cavity (42), at one of the ends, adapted to receive, at least in part, the said nose bridge (10) and the said spectacles lenses (20), each of the said spectacles lenses (20) being fixed respectively at one end of each of the inner temples (30) by a first connecting element (25), the said nose bridge (10) being fixed on each inner temple (30) by at least a second connecting element (15), **characterized in that** said outer temple (40) of each temple system (5) comprised of a preformed bistable blade (45), having a first equilibrium position in which the said preformed bistable blade (45) is largely flat and having a second equilibrium position in which the said preformed bistable blade (45) is longitudinally curved, the said preformed bistable blade (45) extending longitudinally along the said first cavity (41).

2. A spectacles device (1) according to claim 1, **characterised in that** the said preformed bistable blade (45) of each temple system (5) narrows in width at the end furthest from the nose bridge (10).

3. A spectacles device (1) according to any of the foregoing claims **characterised in that** the said first connecting element (25) is a lens holder attached to the said inner temple (30) and to the said spectacles lenses (20).

4. A spectacles device (1) according to any of the foregoing claims, **characterised in that** the said inner temple (30) of each temple system (5) is a toroidal shape and the said outer temple (40) of each temple system (5) comprises a cleat (46) projecting from the said first cavity (41), the said cleat (46) being adapted to form an abutment with the end of the inner temple (30) the furthest from the nose bridge (10).

5. A spectacles device (1) according to any of the foregoing claims, **characterised in that** the said at least one second connecting element (15) is composed of a lug (16) arranged on the end of the said nose bridge (10) and a groove (17) set longitudinally the length of the said inner temple (30), the said lug (16) having a shape adapted to be able to slide along the said groove.

6. A spectacles device (1) according to Claim 5, **characterised in that** at least one cam (11) is arranged on one side of the nose bridge (10), the said at least one cam (11) being adapted to allow the, at least partial, covering of the said inner temples (30) and the said spectacles lenses (20) between them.

7. A spectacles device (1) according to Claim 6, **characterised in that** the said nose bridge (10) is markedly in the shape of an "X".

8. A spectacles device (1) according to any of the foregoing claims, **characterised in that** it comprises a removable fastening device (50) between the said nose bridge (10) and each of the said outer temples (40).

9. A spectacles device (1) according to any of the foregoing claims, **characterised in that** the different constitutional elements of the said device (1) all possess at least one axis of symmetry.
